# FASCICULE DE BREVET EUROPEEN

(11) **EP 1 045 400 B1**
(45) Date de publication et mention de la délivrance du brevet: **16.06.2004**
(21) Numéro de dépôt: 00400947.8
(22) Date de dépôt: 06.04.2000
(51) Int. Cl.: H01B 3/42, H01B 7/28

(54) **Fil électrique isolé résistant en immersion totale**
Isolierter elektrischer Draht, resistent beim völligen Eintauchen
Insulated electric wire resistant to total immersion

(30) Priorité: 15.04.1999 FR 9904714
(43) Date de publication de la demande: 18.10.2000
(73) Titulaire: Nexans, 75008 Paris (FR)
(72) Inventeur: Studer, Virginie, 69680 Chassieu (FR); Preux, Laurent, 38460 Chozeau (FR); Fournier, Jérôme, 69006 Lyon (FR); Danel, Léonard, 02300 Neuflieux (FR)
(74) Mandataire: Feray, Valérie

(56) Documents cités:
- EP-A- 0 222 683
- EP-A- 0 712 139
- WO-A-88/09041
- DE-A- 3 606 683
- GB-A- 1 177 471
- DATABASE WPI Section Ch, Week 198031 Derwent Publications Ltd., London, GB; Class A18, AN 1980-54493C XP002125088 & JP 55 081416 A (HITACHI CABLE LTD), 19 juin 1980 (1980-06-19)
- DATABASE WPI Section Ch, Week 199234 Derwent Publications Ltd., London, GB; Class A18, AN 1992-279887 XP002125087 & JP 04 190510 A (FURUKAWA ELECTRIC CO LTD), 8 juillet 1992 (1992-07-08)

## Description

La présente invention porte sur les fils électriques isolés, en particulier de bobinage, qui peuvent être utilisés en toute sécurité dans des conditions d'immersion totale dans l'eau ou dans l'huile et résistent à l'eau et à l'hydrolyse.

Les applications de tels fils sont notamment les pompes immergées, les pompes et moteurs d'équipements électroménagers tels que lave-linge, lave-vaisselle et sèche-linge, les équipements automobiles, les transformateurs remplis d'huile et les fils de câblage soumis à un environnement d'eau et/ou d'huile.

De manière connue, les fils électriques isolés comportent un revêtement sur leur conducteur électrique, qui assure l'isolation électrique du conducteur électrique et assure la résistance du fil au milieu environnant. Ce revêtement est spécifique pour les conditions d'utilisation du fil.

Ainsi, le revêtement des fils électriques utilisés en immersion totale dans l'eau est formé d'une couche de PVC, extrudée directement sur le conducteur électrique et prévue relativement épaisse. Ces fils revêtus de PVC sont de classe thermique basse, inférieure à 120°C, du fait d'une décomposition possible du PVC à des températures supérieures et alors de problèmes de pollution.

Le revêtement des fils électriques de bobinage, qui sont utilisés dans un environnement d'eau mais ne sont pas immergés sauf accidentellement, est souvent formé d'une ou plusieurs couches d'émaillage pour l'obtention d'un fil de section réduite. Cependant, ces fils sont associés à des circuits de protection prévus dans les équipements concernés, pour éviter des courts-circuits en cas de contact accidentel avec l'eau.

Le revêtement des fils électriques utilisés en immersion totale dans l'huile est quant à lui formé en général d'au moins une couche d'émaillage sur le conducteur et d'au moins une couche de papier sur l'émaillage, l'ensemble assurant la tenue du fil émaillé à l'hydrolyse.

La présente invention a pour but de réaliser un fil électrique isolé, qui est utilisable dans l'eau comme dans l'huile et permet ainsi d'uniformiser le type de revêtement des fils comparables connus utilisés en immersion totale dans ces milieux et d'éviter la nécessité de circuits de protection associés aux autres fils connus précités.

Elle a également pour but de réaliser un tel fil électrique isolé, dont la section finale est réduite par rapport à celle des fils comparables connus utilisés en immersion totale.

La présente invention a aussi pour but de réaliser un tel fil isolé dont la classe thermique est élevée.

Selon la présente invention, le fil isolé résistant en immersion dans l'eau et dans l'huile comporte un conducteur électrique et un revêtement sur le conducteur et est caractérisé en ce que ledit revêtement comprend une couche intérieure formée par au moins une couche d'émaillage sur ledit conducteur et une couche extérieure de polyphénylène oxyde sur ladite couche intérieure..

Avantageusement, ladite couche extérieure de polyphénylène oxyde est en polyphénylène oxyde modifié par un polystyrène.

Avantageusement aussi, ladite couche extérieure de polyphénylène oxyde modifié ou non est d'épaisseur réduite comprise entre 50 et 250 µm.

De préférence, ladite couche intérieure comporte deux couches d'émaillage. Avantageusement, ladite couche extérieure de polyphénylène modifié ou non est extrudée sur ladite couche intérieure.

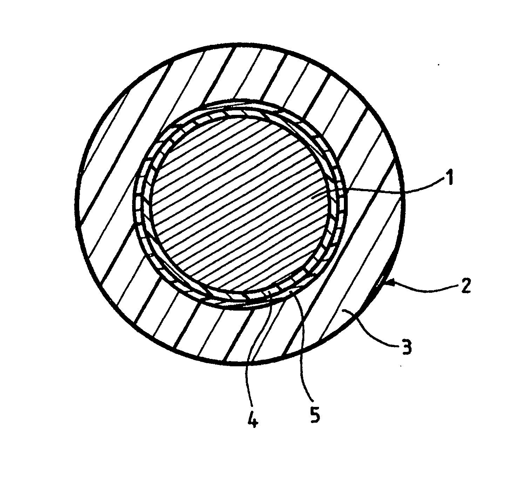

Les caractéristiques et avantages de la présente invention ressortiront de la description d'un mode de réalisation donné à titre d'exemple préférentiel mais non limitatif et illustré dans le dessin ci-annexé.

Le fil électrique isolé, selon ce mode de réalisation, comprend un conducteur électrique 1 et un revêtement 2 sur celui-ci. Ce revêtement 2 comporte une couche extérieure 3 de polyphénylène oxyde (PPO) ou de préférence de polyphénylène oxyde modifié par un polystyrène (PPO/PS). Cette couche 3 de PPO ou PPO/PS peut être d'épaisseur relativement importante. Toutefois elle est avantageusement d'épaisseur réduite, comprise entre 50 et 250 µm et de préférence entre 50 et 150 µm.

Dans ce mode de réalisation, le revêtement 2 comporte également une couche intérieure formée par deux sous-couches d'émaillage 4 et 5. qui sont réalisées directement sur le conducteur 1 et sur lesquelles la couche extérieure 3 de PPO ou PPO/PS est extrudée. La sous-couche d'émaillage la plus intérieure 4 est en particulier en polyesterimide PEI et l'autre sous-couche d'émaillage 5 en polyamide-imide PAI.

Bien entendu, ce revêtement peut ne comporter qu'une seule sous-couche d'émaillage au lieu des deux sous-couches précitées.

Le ou l'une des couches d'émaillage peuvent être en variante en polyester, polyuréthanne, polyformal de vinyle, polyimide ou polyamide. La ou les sous-couches d'émaillage n'augmentent que de très peu l'épaisseur radiale du revêtement 2 et sont de préférence choisies pour améliorer la classe thermique du fil.

Le fil selon l'invention dont le revêtement est constitué de la couche de PPO ou PPO/PS avec au moins une sous-couche d'émaillage est particulièrement résistant à l'eau et à l'hydrolyse et peut-être utilisé en immersion totale dans l'eau ou l'huile ou dans un environnement d'eau sans protection associée contre les court-circuits. Une épaisseur comprise en 50 et 250 µm de PPO ou PPO/PS peut suffire, alors que comparativement une épaisseur minimale de 700 µm de PVC est nécessaire pour les fils ayant la même section de conducteur et étant utilisés en immersion totale dans l'eau. La section du fil fini est donc réduite par rapport aux fils revêtus de PVC. La section du fil fini est également réduite par rapport aux fils émaillés revêtus de papier pour les transformateurs. Pour une section donnée du conducteur, l'invention conduit à un fil isolé fini d'encombrement très réduit grâce auquel les équipements électriques l'utilisant atteignent un rendement très largement supérieur à celui obtenu précédemment.

La durée de vie du fil selon l'invention et la résistance d'isolement fil à fil d'un bobinage, quand ce fil est en immersion totale dans l'eau, sont excellentes et améliorées par rapport à un fil revêtu de PVC. En outre, l'adhésion de PPO ou PPO/PS sur un conducteur émaillé est meilleure que celle du PVC sur le conducteur nu.

Par ailleurs le fil selon l'invention est de classe thermique supérieure à celle du fil à revêtement de PVC et évite tout risque de pollution. Le revêtement constitué des deux sous-couches d'émaillage en particulier en PEI et PAI et de la couche de PPO ou PPO/PS permet l'utilisation du fil en immersion totale dans l'eau froide ou chaude, pour des bobinages de moteurs de classe B (120°C) ou F (155°C), alors que le fil revêtu de PVC ne le permettait pas.

Des tests effectués par la demanderesse sur un fil de diamètre extérieur de 0,895 mm, dont le conducteur de cuivre a un diamètre de 0,56 mm et le revêtement est constitué de deux sous-couches d'émaillage PEI et PAI et d'une épaisseur radiale de 150µm de PPO/PS, ont montré les caractéristiques exceptionnelles d'un tel fil. En particulier, la durée de vie de ce fil, mesurée en immersion dans l'eau à 60 °C et sous 600 V en courant alternatif, est supérieure à 160 jours, sachant que les sous-couches d'émaillage n'apportent aucune amélioration de la durée de vie des fils en immersion totale. Ainsi également, la résistance d'isolement de ce même fil, mesurée au fur et à mesure du test de durée de vie mais alors que le fil est soumis à 1000 V en courant continu pendant 30 s, est de 770 G Ohm initialement et est toujours de 64 M Ohm au bout du test de durée de vie.

Ce fil a par ailleurs d'excellentes propriétés physiques pour la constitution de bobinage.

On indique en outre à titre indicatif que les caractéristiques de ce fil ont été comparées à celles de fils ayant une couche de polyamide semi-aromatique ou en polymère fluoré, en lieu et place de la couche de PPO/PS et de même épaisseur que celle-ci. La durée de vie et la résistance d'isolement de tels fils en immersion totale dans l'eau sont très inférieures à celles du fil selon l'invention.

## Revendications

1. Fil isolé résistant en immersion dans l'eau et dans l'huile, comportant un conducteur électrique et un revêtement sur ledit conducteur,
**caractérisé en ce que** ledit revêtement (2) comprend une couche intérieure formée par au moins une couche d'émaillage (4, 5) directement en contact avec ledit conducteur (1), et une couche extérieure de polyphénylène oxyde (3) sur ladite couche intérieure.

2. Fil selon la revendication 1, **caractérisé en ce que** ladite couche extérieure (3) de polyphénylène oxyde est en polyphénylène oxyde modifié par un polystyrène.

3. Fil selon l'une des revendications 1 et 2, **caractérisé en ce que** ladite couche extérieure (3) est d'épaisseur comprise entre 50 et 250 µm.

4. Fil selon la revendication 3, **caractérisé en ce que** ladite couche extérieure (3) est extrudée.

5. Fil selon l'une des revendications 1 à 4, **caractérisé en ce que** ladite couche intérieure comporte deux couches d'émaillage (4, 5) entre ledit conducteur électrique (1) et ladite couche extérieure (3).

6. Fil selon la revendication 5, **caractérisé en ce que** la couche d'émaillage (4) située directement sur ledit conducteur est en polyesterimide et l'autre (5) en polyamide-imide.

7. Fil selon l'une des revendications 1 à 6, **caractérisé en ce qu'**il est utilisé pour la fabrication d'un bobinage utilisable en immersion dans l'eau et dans l'huile.

## Patentansprüche

1. Isolierter Draht, resistent beim Eintauchen in Wasser und in Öl, der einen elektrischen Leiter und einen Überzug über dem Leiter besitzt,
**dadurch gekennzeichnet, dass** der Überzug (2) eine Innenschicht aufweist, die aus mindestens einer Lackisolierschicht (4, 5) besteht, die mit dem Leiter (1) in direktem Kontakt steht, und eine Außenschicht aus Polyphenylenoxyd (3) auf der Innenschicht.

2. Draht nach Anspruch 1, **dadurch gekennzeichnet, dass** die Außenschicht (3) aus Polyphenylenoxyd aus einem durch ein Polystyrol modifizierten Polyphenylenoxyd besteht.

3. Draht nach einem der Ansprüche 1 oder 2, **dadurch gekennzeichnet, dass** die Außenschicht (3) eine Stärke zwischen 50 und 250 µm besitzt.

4. Draht nach Anspruch 3, **dadurch gekennzeichnet, dass** die Außenschicht (3) extrudiert ist.

5. Draht nach einem der Ansprüche 1 bis 4, **dadurch gekennzeichnet, dass** die Innenschicht aus zwei Schichten Lackiso!ienmg (4, 5) zwischen dem elektrischen Leiter (1) und der Außenschicht (3) besteht.

6. Draht nach Anspruch 5, **dadurch gekennzeichnet, dass** die Lackisolierschicht (4), die sich direkt auf dem Leiter befindet, aus Polyesterimid besteht und die andere (5) aus Polyamidimid besteht.

7. Draht nach einem der Ansprüche 1 bis 6, **dadurch gekennzeichnet, dass** er zur Herstellung einer Wicklung verwendet wird, die in Wasser oder Öl eingetaucht werden kann.

## Claims

1. Insulated wire resistant to immersion in water and oil, comprising an electric conductor and a coating on said conductor, **characterized in that** said coating (2) comprises an inner layer formed of at least one enamelling layer (4,5) directly in contact with said conductor (1), and an outer layer in polyphenylene oxide (3) on said inner layer.

2. Wire as in claim 1, **characterized in that** said outer layer (3) of polyphenylene oxide is in polyphenylene oxide modified with a polystyrene.

3. Wire as in either of claims 1 and 2, **characterized in that** said outer layer (3) has a thickness of between 50 and 250 □m.

4. Wire as in claim 3, **characterized in that** said outer layer (3) is extruded.

5. Wire as in any of claims 1 to 4 **characterized in that** said inner layer comprises two enamelling layers (4,5) between said electric conductor (1) and said outer layer (3).

6. Wire as in claim 5, **characterized in that** the enamelling layer (4) located directly on said conductor is in polyesterimide and the other (5) in polyamide-imide.

7. Wire as in any of claims 1 to 6, **characterized in that** it is used to manufacture a winding which may be used in immersion in water and in oil.
